# EUROPÄISCHE PATENTSCHRIFT

(11) **EP 1 582 555 B1**
(45) Veröffentlichungstag und Bekanntmachung des Hinweises auf die Patenterteilung: **22.07.2009**
(21) Anmeldenummer: 05006364.3
(22) Anmeldetag: 23.03.2005
(51) Int. Cl.: C08J 5/18, A01G 1/02

(54) **Thermoplastische photobiologische Kunststofffolie**
Thermoplastic photo biological plastic film
Film thermoplastique photobiologique

(30) Priorität: 23.03.2004 DE 102004014907
(43) Veröffentlichungstag der Anmeldung: 05.10.2005
(73) Patentinhaber: GRAFE Color Batch GmbH, 99444 Blankenhain (DE)
(72) Erfinder: Israel, Gerhard, 68623 Lampertheim (DE); Caro, Juan Carlos, Dr., 99425 Weimar (DE); Henkel, Petra, 99510 Apolda (DE)
(74) Vertreter: Oehmke, Volker

(56) Entgegenhaltungen:
- EP-A- 1 262 511
- WO-A-02/080656
- US-A- 5 022 181

## Beschreibung

Die Erfindung betrifft thermoplastische photobiologische Kunststofffolien, die in der Landwirtschaft als Bedachungen und Abdeckungen, beim Anbau sowie bei der Lagerung von Obst, Gemüse und Blumen verwendet werden.

Maßgebliche Faktoren für eine gute Ernte im Sinne des Landwirts sind u.a. :
- optimale Nutzung der jeweiligen herrschenden Wetterverhältnisse
- Maßnahmen zur Unkraut- und Schädlingsbekämpfung
- Schutz der angebauten Fläche
- Integrierter und biologischer Landbau

Durch die ständigen Innovationen und Neuentwicklungen in der Landwirtschaft bleibt nur das Wetter als sich verändernde, nicht beeinflussbare Größe übrig, während Unkraut, Schädlinge und sonstige Schäden an sich mehr oder weniger unter Kontrolle gehalten werden können.

Bei der erstmaligen Anwendung einer neuentwickelten Folie wird angestrebt, dass die Menge an geerntetem Obst und Gemüse während der gesamten Ernteperiode erhöht wird. Die Qualität soll dabei verbessert werden, während die Zeit zwischen Wachstum, Reife und Ernte soweit verkürzt wird, dass ein hochwertiges Obst oder Gemüse dem Verbraucher zur Verfügung gestellt werden kann, angebaut im integrierten und biologischen Landbau.

Da das Angebot die Nachfrage und zuletzt die Erzeugerpreise bestimmt, hat der Landwirt einen großen finanziellen Vorteil, sollte das Resultat der Ernte im Großhandel zu einem früheren Zeitpunkt verfügbar sein. Die Ernte wird zu einem höheren Preis verkauft.

Die Hauptanwendung der jetzigen neuentwickelten Folie liegt demzufolge im Anbau von Bleich-und Grünspargel.

Gemäß dem Stand der Technik wird das Wachstum von Spargel, je nach Umgebungstemperatur und Wetterverhältnissen, durch die Anwendung von passenden Hilfsmitteln sehr einfach gesteuert.

Unter normalen Anbaubedingungen (Flachbedeckung) werden die Erddämme standardmäßig mit einer transparenten Folie abgedeckt, um einen Ernteverfrühungseffekt zu erreichen. Diese transparente Folie wird maximal für ein paar Monate gebraucht und dabei durch mehrmaliges Stechen zerstört. Sie verfügt nur über Antitau (Antifog)-Eigenschaften, um eine klare Sicht durch die Folie, bei Vermeidung von Kondenswassertropfen auf der innersten Seite, zu ermöglichen. Die Folie gilt deshalb als Ernteverfrühungsfolie, weil sie durch die hohe Transparenz ungehindert die Tageseinstrahlung durchlässt und somit die Spargelerddämme erwärmen kann. Durch die Temperaturerhöhung wird das Wachstum des Spargels soweit angeregt und beschleunigt. Die Ernte kann früher erfolgen als ohne diese Folie.

Wenn die Außentemperaturen zunehmen, kommen die Schwarz-Weiß-Folien zum Einsatz.
Sind die äußeren Temperaturen nicht so hoch und es wird gewünscht, dass soviel Wärme wie möglich in die Spargeldämme gelenkt wird, wird die nach außen hin schwarze Folienseite dazu verwendet, die Hitze aus der globalen Strahlung in der Folie zu speichern. Diese Wärmeenergie wird dann weiter an die Dammoberfläche abgegeben. Es ist naheliegend, dass es durch die Abgabe von Wärme von der schwarzen Folie an die Erde zu Energieverlusten infolge Wärmeabstrahlung kommt. Die Temperatur im Damm nimmt ab, je tiefer man in die Erdschichten der Dämme eindringt. Deshalb sind die Schwarz-Weiß-Folien nicht zur Ernteverfrühung sondern nur zur Erntesteuerung geeignet.

Wenn die Wärmeenergie der globalen Strahlung zunimmt, was während der Sommermonate üblich ist, wird die Schwarz-Weiß-Folie diesmal mit der weißen Seite nach außen hin umgelegt. Durch Reflexion der Wärmestrahlung an der weißen Folienoberfläche wird der gewünschte Abkühleffekt erreicht.

Egal welche Seite nach außen hin abgelegt wird, der Erntehelfer muss immer die Folie umlegen und den Erddamm frei machen, damit Spargel gestochen werden kann. Nach Beendigung dieser Tätigkeit wird die Folie wieder an ihren ursprünglichen Platz gelegt.
Alle diese Folien gehören zum Stand der Technik im Spargelanbau und sind wegen der Anschaffungskosten im unteren Preisbereich angesiedelt. Jedoch erfordern sie eine arbeitskraftintensive Betreuung für ihr Handling.

Ein weiterer Nachteil der lichtundurchlässigen, schwarzen Folien (auch Mulchfolien), wie sie sonst im Spargel- und Erdbeeranbau zur Anwendung kommen, ist der darunter sich bildende Lebensraum für Nagetiere (z.B. Wühlmäuse) und Nematoden (Würmer). Besonders in Erddämmen, die das ganze Jahr in ihrer ursprünglichen Form verbleiben (wie bei Erdbeeren), bieten sich exzellente Lebensbedingungen an.
Unter einer schwarzen Folie wird die Situation zugunsten der Wühlmäuse verbessert, da sie dort Wärme, Schutz vor Raubtieren, Unterschlupf und genug Nahrung finden. Diese Fraßschäden an den Wurzeln begünstigen Pilze und Infektionen (besonders Fusarium), was zu einer Schwächung und Ausfall der Pflanzen führt.

Wird diese Schwarz-Weiß-Folie bereits im Dezember gelegt, wie zum Teil schon üblich, dann wird die Grundlage für optimale Lebensbedingungen für Wühlmäuse gelegt.

Bei Erdbeeren wird vor der Bepflanzung der Jungpflanzen schwarze Folie auf das Feld ausgebreitet, um Erde und Schmutz weitgehend von den Früchten zu trennen und das Unkraut am Wachstum zu hindern. Das Problem der Schädlinge (Insekten, Wühlmäuse) ist dadurch selektiv noch lange nicht gelöst.

In der EP 1 262 511 A2 wird eine ein- oder mehrschichtige, gedeckt eingefärbte, biaxial orientierte Folie, die einen Hydrolysestabilisator in Form eines monomeren, oligomeren oder polymeren Carbodiimid enthalten muß, beschrieben. Nachteilig ist dabei die Zugabe von Titandioxid, Bariumsulfat oder Ruß, wodurch eine gedeckte Folieneinfärbung erreicht werden kann. Es wird somit klar, dass man gleichzeitig eine Absorption von UV- und sichtbarem Licht bei einer hohen Transmission im NIR-Bereich durch eine Folie nach EP 1 262 511 A2 nicht erreichen wird.

Der Erfindung liegt die Aufgabe zugrunde, die vorher genannten Nachteile, insbesondere im Spargel- und Erdbeeranbau sowie auch ähnliche Nachteile beim Anbau anderer Gemüsesorten, durch die Erschaffung einer neuartigen Folie abzustellen.

Diese Aufgabe wird erfindungsgemäß mit einer Thermoplastischen Kunststofffolie aus Polyolefinen dadurch gelöst, dass sie bezogen auf die Folie a) 1 bis 10 Gew.-% mindestens eines UV-Absorbers, b) mindestens einen UV-Stabilisator und c) 1 bis 10 Gew.-% mindestens eines Farbpigments enthalten und ohne Zugabe von Hydrolysestabilisatoren den UV- und sichtbaren Bereich absorbiert, gleichzeitig aber für den NIR-Bereich mit einer Transmission von mindestens 70% durchlässig ist. Verwendbare Farbpigmente, inklusive sogenannte Pigmentpräparationen auf Polyolefin- oder Wachs-Basis, sind gekennzeichnet mit dem Color-Index-Zusatz "Pigment Yellow PY" (z.B. PY 17, PY 83, PY 93, PY 13, PY150), "Sulphur Green SG (z.B. SG 28), "Sulphur Black SBk "(z. B. SBk 91, SBk 121), "Pigment Blue PB" (z.B. PB 29, PB36, PB 28, PB 60) und "Pigment Violett PV" (z. B. PV 23, PV 19, PV 15, PV 37) sowie Pigmente und Farbstoffe der folgenden Stoffklassen:-
- Farbmittel auf Basis von Antrachinon,
- Diarylderivate und Diazokondensationsprodukte,
- Phthalocyanin-Derivate
   sowie lösliche Farbstoffe in jeder Art von gekapselten, beschichteten, ungekapselten oder unbeschichteten Form sowie Materialien, deren durchschnittlichen Partikelgröße im Nanometerbereich liegen. Erreicht wird dabei, dass diese Folie:

- eine hohe Licht- und Wärmedurchlässigkeit aufweist, somit die Wärmeenergie aus der globalen Sonneneinstrahlung mit hoher Transmission die darunter liegenden Erdschichten möglichst ungehindert erwärmen kann,
- gleichzeitig gibt die hohe, für das menschliche Auge wichtige Transparenz in Abhängigkeit der Absorptions- und Transmissionseigenschaften im sichtbaren Bereich, dem Anwender die Möglichkeit, jederzeit eine Sichtkontrolle durchzuführen, ohne die liegende Abdeckung jedes Mal zu entfernen,
- die Bildung von Unkraut und sonstige unerwünschte Nebenerscheinungen unterbindet.
- einen Herbizid-Effekt gegen unerwünschte Begleitpflanzen und Fungizid-/ Fungistatische - auch Antifungi- Wirkung gegen Pilzinfektionen, ohne Einsatz von Chemikalien, aufweist.

Um diese Aufgabe zu lösen, wurden verschiedene Ansätze entwickelt, die am Ende zum gleichen Ergebnis geführt haben. Diese Ansätze werden kurz wie folgt zusammengefasst:

### Ansatz 1:

Verwendung von mindestens einem Farbpigment mit einer Gesamtkonzentration im Endprodukt von maximal 10 Gew.%, bei Dicken des Endproduktes von 6 bis 350 Mikrometer, wobei der übriggebliebene Restanteil von 100 Gew. %, abzüglich dem Gehalt in Gewichtsprozent an wertgebenden Substanzen, aus Polymerträger, UV-Stabilisatoren, Dispergierhilfsmittel, Antioxydantien, Antifog sowie weiteren Additiven und Füllstoffen in den üblichen Konzentrationen bestehen kann.

### Ansatz 2:

Verwendung von mindestens einem Farbpigment mit einer Konzentration im Endprodukt von maximal 10 Gew. % sowie zusätzlich von mindestens einem UV-Absorber mit einer Konzentration im Endprodukt von maximal 5 Gew. % bei Dicken des Endproduktes von 6 bis 350 Mikrometer, wobei der übriggebliebene Restanteil von 100 Gew. %, abzüglich dem Gehalt in Gewichtsprozent an wertgebenden Substanzen, aus Polymerträger, UV-Stabilisatoren, Dispergierhilfsmittel, Antioxydantien, Antifog sowie weiteren Füllstoffen in den üblichen Konzentrationen bestehen kann.

Als Beispiel für ein thermoplastisches Erzeugnis kann eine monoschichtige Folie herangezogen werden. Die Menge an wertgebenden Substanzen im Endprodukt (Folie) wird immer durch deren Dicke vorgegeben.

Je nach Einsatzbereich und anzubauendem Gemüse, Blume oder Frucht wählt man gezielt die Art der wertgebenden Substanzen aus. Diese ist dadurch begründet, dass das Spektralverhalten der Folie viele unterschiedliche, in ihrer Wirkung positive oder negative Effekte hervorrufen kann.

Die Kunststofffolie, als Beispiel für ein thermoplastisches Erzeugnis gemäß der vorliegenden Erfindung, kann durch verschiedene Techniken hergestellt werden. Eine variable Foliendicke zwischen 6 bis 350 Mikrometer ist anwendbar.

Die Folie kann sowohl monoschichtig als auch mehrschichtig, monoaxial oder biaxial aufgebaut und gestreckt werden.

Jedoch ist bereits ein monoschichtiger Folienaufbau ohne Streckung bei mittleren Foliendicken sehr wirkungsvoll.

In Frage kommen sowohl Blas- als auch Flachfolien, in Abhängigkeit vom Polymer und den Herstellungsbedingungen.

Für eine 40 Mikrometer Folie im Obst- und Gemüseanbau sollte im Endprodukt enthalten sein: 5,0 Gew. % von mindestens einem der mit dem Color-Index-Zusatz "PY" gekennzeichneten Farbpigmente.
1,5 Gew. % von mindestens einem UV-Absorber (z. B. auf Benzophenon-, Benzotriazol- oder Benzotriazin-Basis)

Für eine 80 Mikrometer Folie im Obst- und Gemüseanbau sollte im Endprodukt enthalten sein: 5,0 Gew. % von mindestens einem der mit dem Color-Index-Zusatz "PY" gekennzeichneten Farbpigmente.
0,8 Gew. % von mindestens einem UV-Absorber (z. B. auf Benzophenon-, Benzotriazol- oder Benzotriazin-Basis)

Für eine 100 Mikrometer Folie im Obst- und Gemüseanbau sollte im Endprodukt enthalten sein: 3,0 Gew. % von mindestens einem der mit dem Color-Index-Zusatz "PY" gekennzeichneten Farbpigmente.
0,5 Gew. % von mindestens einem UV-Absorber (z. B. auf Benzophenon-, Benzotriazol- oder Benzotriazin-Basis)
Den Restanteil teilen sich der Polymerträger (EVA, PE oder PP) sowie ein Standard-UV-Stabilisator (vorwiegend vom Typ eines Hindered Amine Light Stabilizers HALS), Dispergierhilfsmittel z.B. auf Stearat-Basis, Antioxydantien auf phenolischer oder Phospit-Basis
sowie bei Bedarf Antifog, Kaolin, Kreide, Silica und weitere Additive, Farben und Füllstoffe. Jedoch muss immer mit einer Abnahme der Lichttransmission bei Zugabe weiterer Stoffe gerechnet werden.

Für die Folienproduktion durch den Hersteller ist es unerlässlich, ein Konzentrat in Granulatform zu verwenden. Das Masterbatch wird bei einer bestimmten Dosierung zwischen 1 Gew. % und 20 Gew. %, je nach Dicke des thermoplastischen Endproduktes, in die Gesamtmischung eingegeben.
Die wertgebenden Substanzen können in den folgenden Masterbatch-Rezepturen so enthalten sein:
Für eine 40 Mikrometer Folie und eine Dosierung des Masterbatches von 20 Gew. % im Obstund Gemüseanbau sollte im Masterbatch enthalten sein :
   10 Gew. % von mindestens einem der mit dem Color-Index-Zusatz PY gekennzeichneten Farbpigmente.
   8 Gew. % von mindestens einem UV-Absorber (z. B. auf Benzophenon-, Benzotriazol- oder Benzotriazin-Basis)
Für eine 80 Mikrometer Folie und eine Dosierung des Masterbatches von 8 Gew. % im Obstund Gemüseanbau sollte im Masterbatch enthalten sein:
   55 Gew. % von mindestens einem der mit dem Color-Index-Zusatz PY gekennzeichneten Farbpigmente.
   10 % von mindestens einem UV-Absorber (z. B. auf Benzophenon-, Benzotriazol- oder Benzotriazin-Basis)
Für eine 100 Mikrometer Folie und eine Dosierung des Masterbatches von 20 % im Obst- und Gemüsebau sollte im Endprodukt enthalten sein:
   10 Gew. % von mindestens einem der mit dem Color-Index-Zusatz PY gekennzeichneten Farbpigmente.
   5 Gew. % von mindestens einem UV-Absorber (z. B. auf Benzophenon-, Benzotriazol- oder Benzotriazin-Basis)

Den Restanteil teilen sich der Polymerträger (EVA, PE oder PP), ein Standard-UV-Stabilisator (z.B. Hindered Amine Light Stabilizer, HALS), Dispergierhilfsmittel z. B. auf Stearat-Basis, Antioxydantien auf phenolischer oder Phospit-Basis sowie bei Bedarf Antifog, Kaolin, Kreide, Silica und weitere Additive, Farben und Füllstoffe.

Folgende Einsatzbeispiele sollen die Rolle der jetzigen hier vorgestellten Folie verdeutlichen, ohne die möglichen und zukünftigen Anwendungen auf genau diese speziellen Fälle eingrenzen zu wollen.

### Beispiel Bleichspargel:

Die Folie, erfindungsgemäß hoch transparent, ist in der Lage, neben dem UV-Bereich auch Teile des blauen und grünen sichtbaren Bereiches zu absorbieren. Sie führt beim Spargelanbau dazu, dass die durchgelassene Wärmeenergie die Temperatur im Erddamm um mindestens 5°C erhöht, als eine vergleichbare transparente, farblose Standardfolie zur Ernteverfrühung.
Physikalischer Hintergrund für dieses Verhalten ist die Umwandlung von UV-Licht in wärmebringendes Infrarotlicht. Der UV-Absorber absorbiert das UV-Licht der globalen Sonneneinstrahlung und die Energie, die durch die Folie gespeichert wird, wird in Wärme umgewandelt. Die Infrarotstrahlung dringt in die Erde ein und kann nicht wieder aus der Folie heraustreten. Durch diesen Effekt kann man viel bessere Wärmeergebnisse erzielen.
Man kann demzufolge mit der erfindungsgemäßen Folie bis zu 90 % Strahlungsdurchlässigkeit erreichen.

Da dieser Temperaturanstieg zu einem beschleunigten Wachstum der Spargelstängel gegenüber einer vergleichbaren Standardfolie zur Ernteverfrühung führt, wird diese neuentwickelte Folie als eine Ernteverfrühungsfolie bezeichnet.

Um dennoch nicht die Erzeugerpreise durch eine unkontrollierte Erhöhung des Spargelangebotes zu reduzieren, ist es dem Landwirt zu empfehlen, nur einen begrenzten Teil des gesamten Spargelfeldes mit dieser Folie abzudecken. Damit kann im Sinne des Erzeugers zeitlich eine kleinere Menge an Spargel zu einem höheren Preis auf den Markt gebracht werden.

Hier liegt auch der Unterschied zu einer Standard-Ernteverfrühungsfolie, wo der Landwirt eigentlich eine größere Fläche des gesamten Spargelfeldes abdeckt, um eine größere Ernte und einen entsprechend hohen Umsatz aus dem Spargelverkauf zu erzielen.
Einer der wichtigsten Aspekte der neu entwickelten Folie betrifft ihre Fähigkeit, eine Verfärbung des Spargels durch Lichtkontakt zu verhindern. Durch die gezielte Herausnahme des blauen Bereiches der PAR-Strahlung kann die Antocyan-Synthese, verantwortlich für die Verfärbung, verhindert werden.

Würde man eine Standard Antitau-Folie zur Ernteverfrühung verwenden, würden sich die Spargelspitzen beim Kontakt mit Licht violett verfärben.

Die fehlende Verfärbung ist jedoch das wichtigste Qualitäts- und Verkaufsmerkmal für den Bleichspargel, wie er meist in Deutschland verzehrt wird.

Überraschenderweise wurde mit der jetzigen, hier neu entwickelten Folie festgestellt, dass die aus dem Erddamm herausragenden Spargelspitzen sich nicht verfärben, solange die Erddämme durch die Folie abgedeckt werden.

Der Effekt kann zusätzlich durch den Spargelstecher genutzt werden, um genau bei nur solchen Dämmen zu ernten, wo gerade eine Spargelspitze zu sehen ist. Ein unnötiges Abheben der Folie, wie bei Schwarz-Weiß-Folien, oder ein Stechen, wie bei der transparenten Folie, bleibt somit erspart.

Sollte wiederum ein Stechen nicht unmittelbar möglich sein, bleibt das höchste Qualitätsmerkmal des Bleichspargels -die fehlende Verfärbung- trotz Herausragens aus der Erdoberfläche für einige Tage solange erhalten, bis er geerntet werden kann.

Durch die hohe Lichttransmission und optische Transparenz zu den Erddämmen bietet die Folie erfindungsgemäß keine Möglichkeit mehr für Nagetiere (z.B. Wühlmäuse) und Nematoden (Würmer), sich zu verstecken, um Wurzelschäden und andere Verwüstungen zu verursachen. Die Verhältnisse auf der Oberfläche des Erddammes können optisch jederzeit verfolgt werden.

### Beispiel Grünspargel:

Grünspargel aus hiesiger Produktion gibt es unter normalen Umständen nur in warmen Frühlings- und Sommermonaten. Dabei sind die Erzeugerpreise niedrig und für alle annähernd gleich. Üblicherweise wird Grünspargel in freien Flächen ohne Folienbedeckung angebaut.

Die erfindungsgemäße Folie kann jedoch, in Abhängigkeit des Absorptions- und Transmissionsverhalten im sichtbaren Bereich der Spektralstrahlung, auch zum Anbau von Grünspargel verwendet werden. Für diesen Fall wird die neu entwickelte Folie erfindungsgemäß so ausgestattet, dass der grüne Bereich der PAR-Strahlung freigegeben wird. Es kommt gleichzeitig zu einem guten Streckenwachstum des Grünspargels.

Durch die überraschende und schützende Wirkung der erfindungsgemäßen Folie als Abdeckung eines Tunnelsystems ist es nun möglich, Grünspargel erstmalig im integrierten und biologischen Landbau in kalten Regionen anzubauen und früher als sonst anzubieten.

### Erhebliche Vorteile gegenüber den jetzigen Methoden sind:

Ernteverfrühung tritt ein, so dass ein höherer Preis durch den Erzeuger erzielt werden kann.
Grünspargel ist außerdem vor Außenwitterung, Schmutz und Pilzen geschützt sowie die Anbaufelder sind von sonstigen Unkrautpflanzen und Schädlingen befreit.
Dabei muss man berücksichtigen, dass Grünspargel, im Gegensatz zum Bleichspargel, Chlorophyll benötigt. Deshalb muss der grüne Wellenlängenbereich des Lichtspektrums in der Folie in jedem Fall frei bleiben.

### Beispiel Chicoree:

Chicoree wird wegen der Lichtempfindlichkeit und anschließender Verfärbung der Blätter üblicherweise in dunklen Räumen angebaut. Dadurch ist die landwirtschaftliche Erzeugung dieses Gemüses auf geschlossene Räume festgelegt. Mit der erfindungsgemäßen Folie ist es erstmals möglich, Chicoree im Freiland anzubauen.
Durch die Bedeckung mit einem Tunnelsystem wird der blaue, grüne und gelbe Bereich der PAR-Strahlung vollkommen herausgefiltert. Es entstehen keinerlei Verfärbungen, bei erheblichen Kosteneinsparungen.

In Betracht kommen Tunnelsysteme mit der neu entwickelten Folie als Abdeckung.
Die Folie würde insgesamt zu einer Erntesteuerung, gepaart mit einer Verhinderung möglicher Verfärbungsreaktionen und Schutz von Pilzinfektionen und Schädlingen führen.

Da möglichst ein helles, weißes Gemüse ohne Verfärbung in den Handel kommen soll, ist es durch die spektralen Eigenschaften der erfindungsgemäßen Folie erforderlich, den grünen Wellenlängenbereich des sichtbaren Spektrums zu schließen.

### Beispiel Bleichsellerie:

Die Pflanze besteht aus langen, parallelen Stangen mit kleinen Blättern an der Spitze und einer großen Knolle als Wurzel. Wie der Name schon sagt, sind das wichtigste Qualitätsmerkmal die hellen Stangen. Sie werden an den Endverbraucher verkauft.
Die gewünschte Bleiche erreicht man, indem die Jungpflanze immer wieder beim Wachsen bis unterhalb der Blätter durch Erde bedeckt wird. Auf diese einfache, billige, jedoch sehr arbeitsintensive Art und Weise schützt man die Stängel vor Sonnenlicht, insbesondere vor dem grünen Bereich der PAR-Strahlung, da sie sehr lichtempfindlich sind. Es würde sonst zu Verfärbungen kommen. Durch den direkten Kontakt mit Erde besteht jedoch die Gefahr, dass Schädlinge, Keime und Schadstoffe aus der Erde auf das Endprodukt übertragen werden.
Mit der erfindungsgemäßen Folie braucht nun Bleichsellerie nicht mehr immer wieder mit Erde bedeckt zu werden, sondern könnte innerhalb eines Tunnelsystems mit der Folie als Abdeckung frei wachsen.

Das Resultat ist eine Erntesteuerung, gepaart mit einer Verhinderung von Verfärbungsreaktionen und einer Erhöhung der Pflanzenhöhe. Auch die Gefahr von Schädlingen und Keimen wird dadurch minimiert, dass die Folie transparent ist und Erde nicht mehr die Pflanzenstängel bedeckt.

### Beispiel Rhabarber:

Beim Rhabarber-Anbau werden lange Stängel mit möglichst kleinen Blättern gewünscht. In der Realität sind die Rhabarber-Blätter in freien ungedeckten Flächen sehr groß und schwer, wobei das Wachstum der Stängel begrenzt wird.
In früheren Zeiten wurden Rhabarberpflanzen durch Gefäße oder Kübel zugedeckt, um das Blattwachstum zu reduzieren und die Stängellänge zu erhöhen.
In Tunnelsystemen, mit der neu entwickelten Folie als Abdeckung, können erstmalig Rhabarberpflanzen angebaut werden. In der kürzeren Zeitperiode können längere Stängel und kleine Blätter erzeugt werden. Auch die Gefahr von Schädlingen und Keimen sowie Unkrautentwicklung wird durch den Einsatz der erfindungsgemäßen Folie minimiert.

Die erfindungsgemäße Folie könnte generell und genauso auf alle essbaren Produkte angewandt werden, die die nachteilige Eigenschaft haben, sich unter UV-Licht dunkel zu verfärben, wobei diese Verfärbung die Qualität der Ware mindert. Zu dieser Gruppe gehören auch Champignons.

### Beispielanwendung: Unkrautbekämpfung

Viele Maßnahmen zur Unkrautbekämpfung sind durch die Menschheit seit Beginn einer landwirtschaftlichen Kultur unternommen worden.

Für Jahrhunderte wurden z. B. periodisch genutzte landwirtschaftliche Flächen zur Unkrautbekämpfung abgebrannt. Des weiteren wollte man das Wachstum einer Nutzpflanze auf einem fruchtbaren Boden beschleunigen. Durch die rasante Entwicklung neuer Chemikalien und Stoffklassen werden seit ca. 70 Jahren Herbizide (Pflanzenschutzmittel) angewandt. Deren langjähriger Einsatz verursacht erwartungsgemäß starke Schäden an den bewirtschafteten Ackerflächen. So werden viele begleitende Nutzpflanzen sowie Nützlinge vernichtet. Außerdem findet kontinuierlich eine starke Grundwasserbelastung durch Agrarchemikalien statt.

Der Einsatz von Fungiziden (gegen Pilzinfektionen) hat darüber hinaus den Nachteil, dass dabei auch Mikroorganismen, die sich positiv auf die Pflanze auswirken können, vernichtet werden. Auf der anderen Seite stehen durch neue Chemikalienverordnungen für die Landwirtschaft immer weniger chemische Mittel zur Auswahl. Deshalb kommt in einigen Fällen wieder die thermische Verbrennung der unerwünschten Begleitflora in Frage. Seit Jahren wird jedoch nach neuen Möglichkeiten gesucht, um den Einsatz von Agrarchemikalien ganz zu vermeiden oder erheblich zu reduzieren.

Durch jahrelange Herbizidanwendung hat sich die Begleitflora den Umweltbedingungen angepasst. Deshalb ist die Suche nach neuen Methoden zur Eindämmung der Begleitflora wichtiger denn je. Viele neue Ansätze sind diskussionswürdig.

Es ist z. B. möglich, durch photobiologische Signale die pflanzenphysiologischen Signalbewegungen zu steuern und somit eine Photosynthese zu unterbinden. Besonders bei höher wachsenden Pflanzen, die über die Öffnung der Somata ihren Rhythmus bestimmen, ist dies durch das Photosystem II machbar.
Durch Anwendung der erfindungsgemäßen Folie zeigen überraschenderweise hartnäckige, bereits stark assimilierte, photoautotrophe Pflanzen, wie zum Beispiel Brennnessel, Schafgarbe, Löwenzahn, Sauerampfer und Quecke keinerlei Wachstum.
Es ist daher erstmalig möglich, mehrjähriges assimiliertes Unkraut von den Ackerflächen wirkungsvoll und umweltschonend zu vertreiben und eine Bodendiversität herzustellen. Es wird auch durch das Einsparen von Pestiziden, Herbiziden und Fungiziden die Grundwasserbelastung verringert.
Daraus ableitend ist es möglich, die erfindungsgemäße Folie auf solche Flächen auszulegen, die nicht für eine landwirtschaftliche Nutzung vorgesehen und stark mit Unkraut bewachsen sind, z. B. Kinderspielplätze und Parkanlagen, um herbizid, selektiv, nachhaltig und umweltschonend gegen Unkraut vorzugehen.
Verwendete Polymermaterialien im reinen Zustand oder als Mischungen sind beispielsweise Polyethylen, EVA, Polypropylen sowie andere, dem Stand der Technik bekannte Thermoplaste. Es können auch nachwachsende Rohstoffe oder deren Mischungen mit Thermoplasten zur Anwendung kommen.
Für die Übertragung der Effekte auf eine Standardfolie gemäß der hier vorliegenden Erfindung wird ein Konzentrat in Granulatform bei der Herstellung der Folie benötigt, das die Eigenschaften mitbringt, die für das Gelingen der hier beschriebenen Zieleffekte (Ernteverfrühung, fehlende Verfärbung, ausbleibende Begleitflora, keinerlei Pilzbefall und Abwesenheit von Schädlingen) notwendig sind.
Als Trägermaterial für dieses Konzentrat in Granulatform, auch bekannt als Additivmasterbatch oder Masterbatch, können Stoffe thermoplastischen Ursprungs verwendet werden.
Die transparente farbige Kunststofffolie, die in den gewünschten Breiten als Tunnelbedeckung oder als Gewächshausfolie hergestellt werden kann, enthält mindestens einen Standard-UV-Absorber für eine Anwendung in der Landwirtschaft. Jedoch beträgt erfindungsgemäß die Konzentration aller hinzugegebenen UV-Absorber im Endprodukt, in Abhängigkeit seiner Dicke, bis zu 10 Gew. %, also viel höher, als üblicherweise bei thermoplastischen landwirtschaftlichen Erzeugnissen sonst verwendet und gebraucht wird (max. 0,5 Gew. %).
Zusätzlich kommen ein -oder mehrere- Farbpigmente mit einer maximalen Konzentration bis zu 10 Gew. % im Endprodukt, in Abhängigkeit der Dicke der Folie, zum Einsatz.
Das Zusammenspiel zwischen den Konzentrationen der UV-Absorber und der Farbpigmente sind für das Gelingen der Erfindung in Bezug auf Ernteverfrühungseffekt, Wärmedurchlässigkeit, Transparenz, ausbleibende Begleitflora, gezielte Manipulation der PAR-Strahlung, Steuerung der gewünschten Farbe des Gemüses, ausbleibender Pilzbefall Abwesenheit von Schädlingen, unkrautreduzierende Wirkung und Verhindern von Verfärbungsreaktionen, maßgeblich.
Durch die Konzentration dieser wertgebenden Bestandteile unterscheidet sich die neuentwickelte Folie von den zur Zeit auf dem Markt verfügbaren Produkten.

## Patentansprüche

1. Thermoplastische Kunststofffolie aus Polyolefinen, **dadurch gekennzeichnet, dass** sie bezogen auf die Folie
a) 1 bis 10 Gew.-% mindestens eines UV-Absorbers,
b) mindestens einen UV-Stabilisator und
c) 1 bis 10 Gew.-% mindestens eines Farbpigments enthalten und ohne Zugabe von Hydrolysestabilisatoren den UV- und sichtbaren Bereich absorbiert, gleichzeitig aber für den NIR-Bereich mit einer Transmission von mindestens 70°% durchlässig ist.

2. Verwendung der thermoplastischen Kunststofffolie nach Anspruch 1 als Abdeckung, Bedachung und/oder Bedeckung von Beeten und/oder Gewächshäusern in der Landwirtschaft zur Ernteverfrühung, Erntesteuerung und Verhinderung von beim Kontakt mit Licht hervorgerufenen Verfärbungsreaktionen an landwirtschaftlichen biologischen Produkten.

3. Verwendung der thermoplastischen Kunststofffolie nach Anspruch 1 als antibakteriell, fungistatisch oder fungizid.

4. Verwendung der thermoplastischen Kunststofffolie nach Anspruch 1 zur Bekämpfung und Entfernung von langanhaftenden, bereits assimilierten Unkrautpflanzen auf Flächen, die für landwirtschaftliche und/oder andere Zwecke verwendet werden.

## Claims

1. Polyolefin-based thermoplastic film, **characterized in that** it comprises, by weight of the film,
a) 1 to 10 % by weight of at least one UV absorber,
b) at least one UV stabilizer, and
c) 1 to 10 % by weight of at least one coloring pigment, and
that, without addition of hydrolysis stabilizers, the film absorbs light in the UV and visible ranges, while at the same time being transparent for the NIR range with a transmittance of at least 70%.

2. Use of the thermoplastic film of claim 1 for blanketing, roofing, and/or covering garden beds and/or greenhouses in agriculture, for crop advancement, for crop control and for prevention of agricultural, biological products' coloring reactions caused by exposure to light.

3. Use of the thermoplastic film of claim 1 as antibacterial, fungistatic or fungicidal.

4. Use of the thermoplastic film of claim 1 for fighting and eliminating durable, already assimilated pest plants on surfaces which are used for agricultural and/or other purposes.

## Revendications

1. Film thermoplastique à base de polyoléfines, **caractérisé en ce qu'**il comprend, par rapport au poids du film,
a) 1 à 10 pour cent en poids d'au moins un absorbeur UV,
b) au moins un stabilisateur UV, et
c) 1 à 10 pour cent en poids d'au moins un pigment colorant, et
**en ce que**, sans addition de stabilisateurs d'hydrolyse, ledit film absorbe la lumière dans les gammes UV et visible, et en même temps ledit film est transparent pour la gamme du proche infrarouge, avec une transmittance d'au moins 70 pour cent.

2. Utilisation du film thermoplastique selon la revendication 1 comme couverture, toiture, et/ou recouvrement de platebandes et/ou de serres dans l'agriculture, pour l'anticipation de la récolte, pour le contrôle de la récolte et pour la prévention de réactions de coloration de produits agricoles biologiques qui sont provoquées par exposition à la lumière.

3. Utilisation du film thermoplastique selon la revendication 1 comme antibactérien, fongistatique ou fongicide.

4. Utilisation du film thermoplastique selon la revendication 1 pour lutter et éliminer des mauvaises herbes durables, déjà assimilées sur des surfaces utilisées pour des fins agricoles et/ou d'autres fins.
